# EUROPÄISCHE PATENTSCHRIFT

(11) **EP 1 029 650 B1**
(45) Veröffentlichungstag und Bekanntmachung des Hinweises auf die Patenterteilung: **12.05.2004**
(21) Anmeldenummer: 00103247.3
(22) Anmeldetag: 17.02.2000
(51) Int. Cl.: B29C 65/16, C08K 5/00

(54) **Polyesterformmasse, deren Herstellung und deren Verwendung zum Laserschweissen**
Molded Polyester article, its production method and its use for laser welding
Article moulé en polyèster, son procédé de production et son utilisation pour le soudage à laser

(30) Priorität: 18.02.1999 DE 19906828
(43) Veröffentlichungstag der Anmeldung: 23.08.2000
(73) Patentinhaber: Ticona GmbH, 65451 Kelsterbach (DE)
(72) Erfinder: Reil, Frank, Dipl.-Ing., 64342 Seeheim (DE)

(56) Entgegenhaltungen:
- EP-A- 0 641 821
- WO-A-01/44357
- WO-A-95/26869
- US-A- 3 985 500
- POTENTE H ET AL: "ENTIWICKLUNGSTENDENZEN BEIM LASERCHWEISSEN VON KUNSTSTOFFEN" PLASTVERARBEITER,DE,ZECHNER UND HUETHIG VERLAG GMBH. SPEYER/RHEIN, Bd. 46, Nr. 10, 1. Oktober 1995 (1995-10-01), Seiten 58-59,62,64, XP000556884 ISSN: 0032-1338
- "VERBINDUNG MIT ZUKUNFT" PLASTVERARBEITER,DE,ZECHNER UND HUETHIG VERLAG GMBH. SPEYER/RHEIN, Bd. 48, Nr. 5, 1. Mai 1997 (1997-05-01), Seiten 28-30, XP000691483 ISSN: 0032-1338

## Beschreibung

Die vorliegende Erfindung betrifft eine Formmasse aus Polyester plus Farbpigmenten und deren Verwendung zum Verbinden von Thermoplasten mit Hilfe der Laserschweißtechnik.

Die Technik des Laserschweißens von Thermoplasten hat sich in der Praxis bislang noch nicht in breiter Form durchgesetzt, weil hohe Investitionskosten die potentiellen Anwender abschrecken. Gleichwohl beschreiben H. Potente et al. in Plastverarbeiter Nr. 46 (1995), S. 42 bis 46, die enormen Vorteile dieses Verfahrens bei verschiedenen Einsatzzwecken. Insbesondere wird dem Fügeverfahren in der Zukunft ein beträchtliches Marktpotential prognostiziert (siehe Plastverarbeiter Nr. 48, (1997), S. 28 bis 30).

Bei der Technik des Laserschweißens werden normalerweise zwei Kunststoffe in der Art miteinander kombiniert, dass ein oberer, für das Laserlicht durchlässiger Kunststoff mit einem unteren, für das Laserlicht nicht durchlässigen Kunststoff verbunden wird. Der Laserstrahl durchdringt dabei die obere Kunststoffschicht ohne irgendeine Wirkung zu hinterlassen und trifft auf die untere Schicht, von der er absorbiert wird, was Wärmeenergie freisetzt. Durch die freigesetzte Wärmeenergie wird das Kunststoffmaterial aufgeschmolzen und verbindet sich so mit der oberen Schicht punktuell an der Stelle, wo der Laserstrahl auftrifft.

Nachteilig an dieser Technik ist allerdings, dass mit absorbierenden Farbstoffen oder Pigmenten eingefärbte oder absorbierende Füllstoffe enthaltende Kunststoffmassen nicht verarbeitet werden können, weil das für die Färbung eingesetzte Pigment bzw. der Farb- oder Füllstoff das Laserlicht auf jeden Fall sofort absorbiert und deshalb keine Verbindung zustande kommt.
Als Beispiel können hier mit Ruß schwarz eingefärbte Polyesterformmassen genannt werden.
Gefärbte, lasertransparente Formmassen sind bekannt aus H. Potente et al. in Plastverarbeiter Nr. 46 (1995), S. 58-64.

Aufgabe der vorliegenden Erfindung war es, eine schwarze Polyesterformmasse bereitzustellen, die für Laserlicht durchlässig ist und die deshalb für das Verbinden mit anderen absorbierende Farbstoff, Pigmente oder Füllstoffe enthaltenden Kunststoffteilen nach der Technik des Laserschweißens geeignet ist.

Gelöst wird diese Aufgabe durch eine Polyesterformmasse gemäß dem Anspruch 1

Überraschend lassen sich solche schwarze mit anderen schwarzen oder farbigen Kunststoffteilen verbinden.
Eine Gelbpigment und Violettpigment enthaltende Polyesterformmasse lässt sich auf schwarzen oder farbigen Kunststoffteilen befestigen.
Eine Polyesterformmasse lässt sich verwenden, in der durch Verwendung eines Gelbpigmentes und eines Violettpigmentes ein schwarzer Farbton bewirkt wird.

Als Polyestermaterialien kommen erfindungsgemäß thermoplastische Polyester, die polymerisierte Einheiten enthalten, die sich von einem Ester mindestens einer aromatischen Dicarbonsäure, insbesondere von Terephthalsäure, Isophthalsäure oder 2,6-Naphthalindicarbonsäure, und mindestens einem aliphatischen Diol, insbesondere Ethylenglykol, 1,3-Propandiol oder 1,4-Butandiol, ableiten oder die polymerisierte Einheiten von Tetrahydrofuran enthalten. Erfindungsgemäß geeignete Polyester sind beispielsweise beschrieben in Ullmann's Encyclopedia of Ind. Chem., ed. Barbara Elvers, Vol. A 24, Kap. Polyester (S. 227 bis 251) VCH Weinheim-Basel-Cambridge-New-York (1992). Erfindungsgemäß besonders bevorzugt sind Polyester wie Polyethylenterephthalat oder Polybutylenterephthalat oder Copolyester enthaltend Butylenterephthalat- und Butylenisophthalateinheiten.

Die Polyester können auch durch Einkondensieren geringer Anteile aliphatischer Dicarbonsäuren wie Glutarsäure, Adipinsäure oder Sebacinsäure oder von Polyglykolen wie Diethylenglykol, Triethylenglykol oder auch höhermolekularer Polyethylenglykole modifiziert sein. Ferner können die Polyester noch andere polymerisierte Einheiten enthalten, die sich von Hydroxycarbonsäuren, vorzugsweise von Hydroxybenzoesäure oder Hydroxynaphthalincarbonsäure, ableiten.

Als Polyester können neben neu produziertem Polyester auch Recyclate der ersten, zweiten oder höheren Generation oder Gemische aus neu produziertem Polyester mit Recyclaten verwendet werden. Solche Gemische können gegebenenfalls auch Zuschlagstoffe und Zusätze enthalten oder sie können durch Beimischung anderer kompatibler Polymere modifiziert sein.

Unter dem Begriff Gelbpigment ist erfindungsgemäß insbesondere Sandoplast® gelb zu verstehen, das sich von der Gruppe der Chinophthalonfarbstoffe ableitet. Sandoplast® Gelb 2 G ist im color index verzeichnet unter "S.V. 114 = solvent yellow 114".

Unter dem Begriff Violettpigment ist erfindungsgemäß Sandoplast® violett zu verstehen, das sich von der Gruppe der Anthrachinonfarbstoffe ableitet. Sandoplast® Violett RSB ist im color index verzeichnet unter "S.V. 13 = solvent violett 13".

Derartige Sandoplast®-Farbstoffe sind im Allgemeinen qualitativ hochwertige polymerlösliche Farbstoffe, die für das Anfärben von verschiedenen Kunststoffen geeignet sind. Ihre Standardisierung erfolgt in Polystyrol, worin sie brillante, transparente Färbungen ergeben. Deckende Einstellungen können durch den Zusatz von Weißpigmenten wie Titandioxid oder Zinksulfid erreicht werden. In Kombination mit anderen organischen oder anorganischen Pigmenten ergeben sich farbintensivere und brillantere Färbungen. Zusammen mit fluoreszierenden Hostasol®-Farbstoffen können Sandoplast®-Farbstoffe zur Erzielung ganz besonders brillanter Farbtöne eingesetzt werden.

Die erfindungsgemäß geeignete Menge an Gelbpigment liegt im Bereich von 0,1 bis 2 g/kg Kunststoff, vorzugsweise im Bereich von 0,5 bis 1,5 g/kg Kunststoff.

Die erfindungsgemäß geeignete Menge an Violettpigment liegt im Bereich von 2 bis 10 g/kg Kunststoff, vorzugsweise im Bereich von 3 bis 8 g/kg Kunststoff.

Überraschend hat sich gezeigt, dass die Formmasse mit der erfindungsgemäßen Pigmentkombination trotz ihres für das bloße Auge schwarzen Aussehens für Laserlicht vollständig durchlässig ist und dass diese Formmasse sich somit zur Herstellung der oberen durchlässigen Schicht für das Laserschweißverfahren hervorragend eignet.

Das nachfolgend dargestellte Ausführungsbeispiel soll dem Fachmann die Erfindung und die damit erreichten Vorteile noch deutlicher darstellen.

### Vergleichsbeispiel 1

Zwei schwarze Folien aus Polybutylenterephthalat mit einem Zusatz von Ruß in einer Menge von 6,5 g/kg Kunststoff wurden nach dem Extrusionsverfahren hergestellt und hatten eine Schichtdicke von jeweils 40 µm. Beide Folien wurden übereinandergelegt und mit einem Laserstrahl aus einem NdYAG-Laser über eine Zeitdauer von 3 s bestrahlt.

Nach der Bestrahlung war die obere Folie an ihrer oberen Oberfläche aufgeschmolzen, aber eine Verbindung der beiden Folien war nicht eingetreten.

### Beispiel 1

Vergleichsbeispiel 1 wurde nachgestellt, jedoch mit dem Unterschied, dass für die obere Folie ein Polybutylenterephthalat mit einer Pigmentkombination aus 0,9 g/kg Kunststoff Sandoplast® Gelb und 5,1 g/kg Kunststoff Sandoplast® Violett eingesetzt wurde, die ein schwarzes Aussehen hatte.

Nach der gleichen Bestrahlungsdauer mit dem gleichen Laserstrahl wie in Vergleichsbeispiel 1 hatte sich zwischen den beiden Folien eine festhaftende Verbindung herausgebildet.

## Patentansprüche

1. Schwarze, für Laserstrahlung durchlässige Polyester-Formmasse, wobei zur Erzielung der schwarzen Färbung ausschleißlich eine Kombination aus einem gelben und einem violetten Pigment eingesetzt wird.

2. Formmasse nach Anspruch 1 , wobei Gelb-Pigmente aus der Gruppe der Chinophthalonfarbstoffe und Violett-Pigmente aus der Gruppe der Anthrachinonfarbstoffe verwendet werden.

3. Formmasse nach Anspruch 1 oder 2 , wobei sie als Gelb-Pigment Solvent Yellow 114 enthält.

4. Formmasse nach Anspruch 1 oder 2, wobei sie als Violett-Pigment Solvent Violett 13 enthält.

5. Formmasse nach einem oder mehreren der Ansprüche 1 bis 4, wobei sie als Polyester thermoplastische Polyester wie Polyethylenterephthalat oder Polybutylenterephthalat oder Copolyester mit Einheiten aus Butylenterephthalat- und Butylenisophthalateinheiten enthält.

6. Formmasse nach einem oder mehreren der Ansprüche 1 bis 5, wobei sie Gelb-Pigment in einer Menge im Bereich von 0,1 bis 2 g/kg Kunststoff, vorzugsweise im Bereich von 0,5 bis 1,5 g/kg Kunststoff, enthält.

7. Formmasse nach einem oder mehreren der Ansprüche 1 bis 5, wobei sie Violett-Pigment in einer Menge im Bereich von 2 bis 10 g/kg Kunststoff, vorzugsweise im Bereich von 3 bis 8 g/kg Kunststoff enthält.

8. Verwendung einer Formmasse nach einem oder mehreren der Ansprüche 1 bis 7 zur Herstellung der oberen durchlässigen Schicht für das Verbinden von Kunststoffen nach der Technik des Laserschweißens.

9. Verfahren zur Herstellung einer schwarz gefärbten für Laserstrahlung durchlässigen Formmasse nach einem oder mehreren der Ansprüche 1 bis 7, wobei Polyester mit einer Pigmentkombination aus einem Gelbpigment und einem Violettpigment gemischt wird.

## Claims

1. A polyester molding composition which is black, but laser-translucent, the black coloration being achieved exclusively through use of a combination of a yellow pigment and a violet pigment.

2. A molding composition as claimed in claim 1, where use is made of yellow pigments from the quinophthalone group of dyes and use is made of violet pigments from the anthraquinone group of dyes.

3. A molding composition as claimed in claim 1 or 2, which comprises Solvent Yellow 114 as yellow pigment.

4. A molding composition as claimed in claim 1 or 2, which comprises Solvent Violet 13 as violet pigment.

5. A molding composition as claimed in one or more of claims 1 to 4, in which the polyesters present are thermoplastic polyesters, such as polyethylene terephthalate or polybutylene terephthalate or copolyesters having units derived from butylene terephthalate units and butylene isophthalate units.

6. A molding composition as claimed in one or more of claims 1 to 5, which comprises an amount of from 0.1 to 2 g, preferably from 0.5 to 1.5 g, of yellow pigment per kg of plastic.

7. A molding composition as claimed in one or more of claims 1 to 5, which comprises an amount of from 2 to 10 g, preferably from 3 to 8 g, of violet pigment per kg of plastic.

8. The use of a molding composition as claimed in one or more of claims 1 to 7 for producing the upper translucent layer for bonding plastics by the laser welding method.

9. A process for preparing a molding composition which has a black color and is laser-translucent, as claimed in one or more of claims 1 to 7, by mixing polyester with a pigment combination of a yellow pigment and a violet pigment.

## Revendications

1. Composition de moulage noire en polyester, perméable au rayonnement laser, une combinaison d'un pigment jaune et d'un pigment violet étant exclusivement utilisée pour l'obtention de la coloration noire.

2. Composition de moulage selon la revendication 1, des pigments jaunes parmi le groupe des colorants quinophtalone et des pigments violets parmi le groupe des colorants anthraquinone étant utilisés.

3. Composition de moulage selon la revendication 1 ou 2, celle-ci contenant le pigment jaune Solvent Yellow 114.

4. Composition de moulage selon la revendication 1 ou 2, celle-ci contenant le pigment violet Solvent Violett 13.

5. Composition de moulage selon l'une ou plusieurs des revendications 1 à 4, celle-ci contenant, en tant que polyesters, des polyesters thermoplastiques tels que le polyéthylène-téréphtalate ou le polybutylène-téréphtalate, ou des copolyesters renfermant des motifs dérivés de motifs butylène-téréphtalate et butylène-isophtalate.

6. Composition de moulage selon l'une ou plusieurs des revendications 1 à 5, celle-ci contenant le pigment jaune en une quantité dans la plage de 0,1 à 2 g/kg de matière plastique, de préférence dans la plage de 0,5 à 1,5 g/kg de matière plastique.

7. Composition de moulage selon l'une ou plusieurs des revendications 1 à 5, celle-ci contenant le pigment violet en une quantité dans la plage de 2 à 10 g/kg de matière plastique, de préférence dans la plage de 3 à 8 g/kg de matière plastique.

8. Utilisation d'une composition de moulage selon l'une ou plusieurs des revendications 1 à 7 pour la production de la couche perméable supérieure pour la jonction de matières plastiques conformément à la technique du soudage laser.

9. Procédé de production d'une composition de moulage de couleur noire, perméable au rayonnement laser, selon l'une ou plusieurs des revendications 1 à 7, le polyester étant mélangé avec une combinaison de pigments à base d'un pigment jaune et d'un pigment violet.
